# EUROPÄISCHE PATENTSCHRIFT

(11) **EP 2 259 001 B1**
(45) Veröffentlichungstag und Bekanntmachung des Hinweises auf die Patenterteilung: **02.05.2018**
(21) Anmeldenummer: 09007126.7
(22) Anmeldetag: 28.05.2009
(51) Int. Cl.: F28F 21/02, F24D 3/14

(54) **Formelement zur Übertragung und Abführung von Wärme (Heiz- und Kühlelement)**
Formed element for transferring and removal of heat (heating and cooling element)
Elément mis en forme destiné à la transmission et à l'évacuation de chaleur (élément de chauffage et de refroidissement)

(43) Veröffentlichungstag der Anmeldung: 08.12.2010
(73) Patentinhaber: Zehnder Group International AG, 5722 Gränichen (CH)
(72) Erfinder: Kriesi, Ruedi, 8820 Wädenswil (CH)
(74) Vertreter: Rausch Wanischeck-Bergmann Brinkmann

(56) Entgegenhaltungen:
- EP-A2- 1 512 933
- JP-A- 63 098 965

## Beschreibung

Die vorliegende Erfindung betrifft Formelemente zur Übertragung und Abführung von Wärme nach dem Oberbegriff Anspruchs 1. Solch ein Formelement ist bekannt aus EP 1 512 933 A2. Im Rahmen der vorliegenden Anmeldung wird von hochtemperaturleitendem Material gesprochen, was bedeutet, dass das Material sowohl sehr gut für die Übertragung von Wärme als auch Abführung von Wärme geeignet ist.

Es ist im Stand der Technik bekannt, zur Wärmeübertragung Heizkörper einzusetzen, die von einem Wärmeträgermedium, beispielsweise Wasser, durchströmt werden. Es ist im Stand der Technik auch bekannt, von Wärme- oder Kälteträgermedium durchströmte Rohre in Platten aus Sintergraphit einzulagern. Das Graphit hat sich als besonders gut wärmeverteilendes und -sammelndes Medium erwiesen.

Sintergraphit ist nicht eigenstabil, so dass die gebildeten Wärmeübertragungselemente in entsprechende Gehäuse eingelegt werden müssen, und schwer zu handhaben sind.

Ausgehend vom beschriebenen Stand der Technik liegt der Erfindung die **Aufgabe** zugrunde, ein Wärmeübertragungselement bereitzustellen, welches eine verbesserte Handhabbarkeit und eine verbreiterte Einsetzmöglichkeit bereitstellt.

Zur technischen **Lösung** dieser Aufgabe wird mit der Erfindung ein Formelement zum Aufbau von Vorrichtungen zur Wärmeübertragung und Abführung für die Heizung und/oder Kühlung bestehend aus einem Sandwichaufbau umfassend ein plattenförmiges Element aus einem hochtemperaturleitenden Werkstoff geringer Eigenfestigkeit, auf dessen beiden gegenüberliegenden Oberflächen jeweils eine Schicht eines zugfesten Materials fixiert ist, vorgestellt.

Erfindungsgemäß wird ein biegesteifes Sandwichelement aufgebaut, welches außen zugfeste Schichten aufweist, zwischen denen das Material zur Übertragung der Wärme eingelegt ist. Ein solches Element kann mit geringem Gewicht eigenstabil ohne weiteres Gehäuse eingesetzt werden. Es kann beispielsweise an Bügeln vor Wänden oder unter Decken, aber auch direkt an Wänden und Decken montiert werden, um beispielsweise nach Beplankung als nicht sichtbares Funktionselement eingesetzt zu werden. Der Sandwichaufbau wird bereitgestellt, indem die Schichten fest miteinander verbunden werden. Dies kann beispielsweise durch Kleben erfolgen. Die zugfesten Schichten sind vorzugsweise Dünnschichten, also folienartig aufgebaute Gewebe, Gitter, Metallflächen wie Alu, Holz, Naturfasern, Kunststofffolien und dergleichen. Wesentliche Eigenschaft ist die Erzeugung der Zugfestigkeit auf der Oberfläche des leicht druckfesten, aber nicht zugfesten und wärmeleitenden mittleren Materials. Zur Erhöhung der Druckfestigkeit kann das Graphitmaterial mit Klebstoff durchsetzt werden. Diese äußeren Schichten werden an der oberen und unteren Oberfläche des beispielsweise aus Graphitschaum gebildeten Wärmeübertragungselementes angeordnet.

Der gebildete feste Verbund ist geeignet, um eigenständig gehandhabt zu werden und auch eine gewisse Stoßfestigkeit bereitzustellen. In die Mittelschicht werden Rohre zur Leitung von Wärmeträgermedien für die Heizung und/oder Kühlung, beispielsweise Wasser, Gasen, verdampfenden oder kondensierenden Stoffen und dergleichen eingelegt. Die Rohre werden derart eingelegt, dass diese von außen anschließbar sind.

Auf die äußeren zugfesten Schichten können wiederum zusätzliche wärmeleitende Schichten aufgebracht werden. Darüber hinaus können auf diese Schichten Lamellen aufgebracht werden. Dies kann durch Einpressen, Schweißen, Kleben, Toxen, Löten oder sonstige Befestigungsmethoden erfolgen. Die Lamellen vergrößern die Oberfläche für den konvektiven Wärmeübergang und können beispielsweise beim Einsatz in einem entsprechenden System mit natürlicher oder erzwungener Luftströmung beaufschlagt werden. Dazu können entsprechende Ventilatoren oder Gebläse eingesetzt werden. Das erfindungsgemäße Element kann beispielsweise zur Ausbildung von Deckenstrahlplatten eingesetzt werden, für den mobilen Einsatz in Fahrzeugen, Caravans und dergleichen.

Das erfindungsgemäße Element lässt sich auf einfache Weise handhaben und in vorhandene Systeme einsetzen, in Gehäuse einbringen, anschließen und ist somit ein vorfertigbares Produkt, welches als Zwischenprodukt oder als Endprodukt einsetzbar ist.

Sämtliche Folienschichten sind vorzugsweise schwach wärmeleitend. Aufgrund der möglichen geringen Schichtdicken und Wärmestromdichten genügen dafür aber in bestimmten Fällen bereits auch Kunststoffe.

Weitere Vorteile und Merkmale der Erfindung ergeben sich aus der folgenden Beschreibung anhand der Figuren. Dabei zeigen:
- Fig. 1: eine schematische "transparente" Draufsicht auf ein Ausführungsbeispiel für ein Wärmeelement;
- Fig. 2: eine Seitenansicht gemäß Fig. 1;
- Fig. 3: eine schematische "transparente" Draufsicht gemäß einem weiteren Ausführungsbeispiel für ein Wärmeelement;
- Fig. 4: eine Seitenansicht gemäß Fig. 3;
- Fig. 5: eine vergrößerte Darstellung eines Segmentes gemäß Fig. 4;
- Fig. 6: eine Darstellung für ein Anordnungsbeispiel erfindungsgemäßer Elemente und
- Fig. 7: ein Beispiel für eine alternative Anordnung von Lamellen.

In den Figuren sind gleiche Elemente mit gleichen Bezugszeichen versehen.

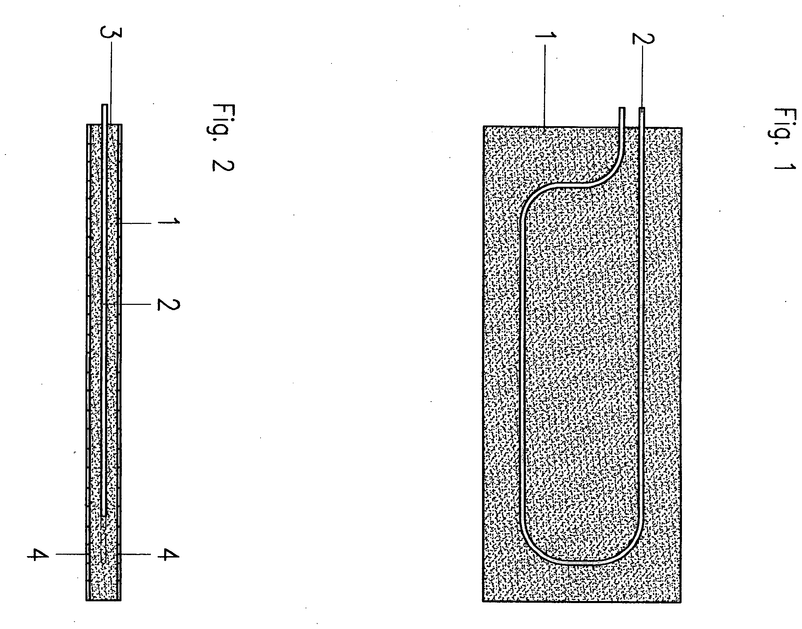

Fig. 1 zeigt ein Element 1 gemäß einem Ausführungsbeispiel der Erfindung. In dieses ist ein Rohr 2 eingelegt, welches ein Wärmeträgermedium führen kann. Die Anschlüsse sind aus dem Element 1 herausgeführt. Das Element 1 besteht aus einem mittleren Plattenelement aus Graphitschaum 3, welches beidseitig mit einer zugfesten Folienschicht 4 versehen ist.

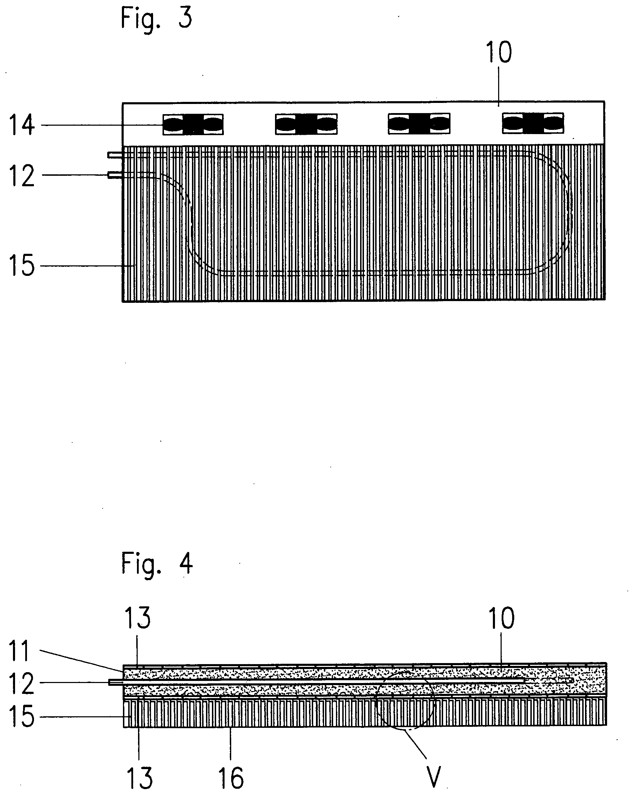

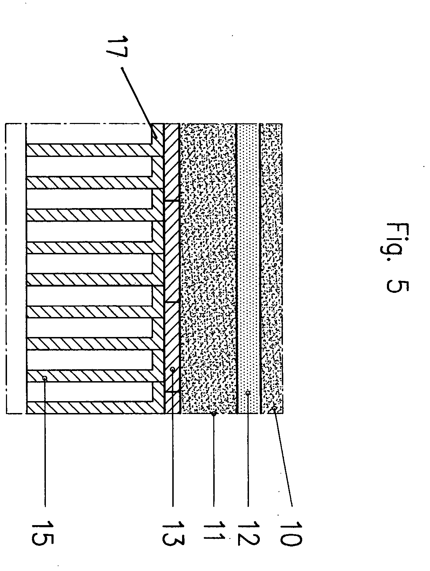

Ein entsprechendes Ausführungsbeispiel ist in den Fign. 3 und 4 gezeigt. Das Element 10 umfasst ein Plattenelement 11 in welches ein Rohr 12 in gleicher Weise wie beim oben genannten Ausführungsbeispiel eingelegt ist. Beidseitig sind zugfeste Folienschichten 13 aufgebracht. Bei diesem Ausführungsbeispiel sind im oberen Bereich Ventilatoren 14 angeordnet, beispielsweise Axial-, Radial- oder Querstromradiatoren, um die Luftgeschwindigkeit um die Lamellen 15 zu erhöhen. Die Lamellen 15 sind gut wärmeleitende Lamellen, welche mit einer der zugfesten Folienschichten 13 wärmeleitend verbunden sind. Die Lamellen sind von einer Umschließungsschicht 16 umschlossen. Das Detail V ist in Fig. 5 in vergrößerter Ausschnittdarstellung gezeigt.

Dort ist gezeigt, dass jede Lamelle 15 einen abgewinkelten Fußbereich 17 aufweist, welcher flächig mit der zugfesten Folienschicht verbunden ist, so dass eine Wärmeleitung stattfinden kann.

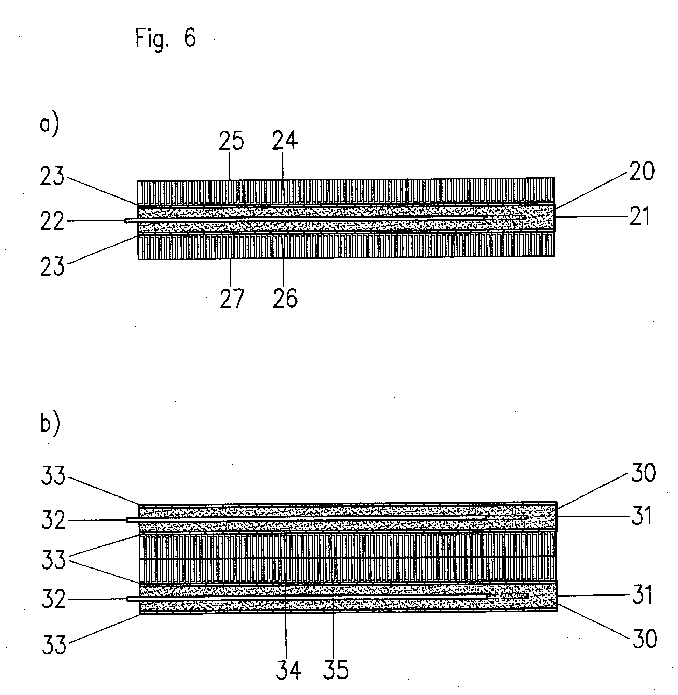

Bei dem Ausführungsbeispiel gemäß Fig. 6a) ist ein Element 20 in gleicher Weise aufgebaut, d. h. ein Plattenelement 21 trägt ein Rohr 22 und ist beidseitig mit einer zugfesten Folienschicht 23 belegt. Im gezeigten Ausführungsbeispiel Fig. 6a) sind die Lamellen auf beiden Seiten angeordnet, so dass die Lamellen 24 mit dem Umschließungselement 25 auf der einen Oberfläche und die Lamellen 26 mit der Umschließung 27 auf der anderen Oberfläche angeordnet sind.

Gemäß Ausführungsbeispiel Fig. 6b) wiederum sind zwei Elemente 30 angeordnet. Die Bezugszeichen sind nur am unteren Element 30 angeordnet und das obere Element ist in gleicher Weise aufgebaut. Die jeweiligen Plattenelemente 31 sind mit dem Rohr 32 bestückt. Beidseitig sind die zugfesten Folienschichten 33 angeordnet. Auf einer Seite die Lamellen 34, und zwar derart, dass die Lamellen der beiden Elemente 30 zueinander zeigen und lediglich durch eine Trennung 35 voneinander getrennt sind.

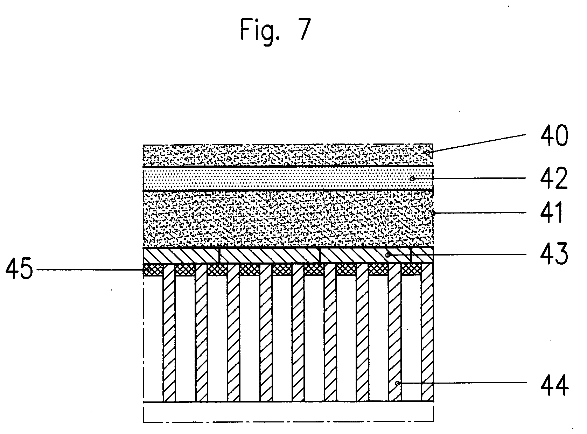

Bei dem Ausführungsbeispiel gemäß Fig. 7 handelt es sich um eine vergrößerte Darstellung eines Ausschnittbereiches analog zu Fig. 5.

Das Element 40 besteht wiederum aus einem Plattenelement 41, in welches das Rohr 42 eingelagert ist. Zugfeste Folienschichten 43 sind auf den beiden Oberflächen angeordnet. An der gezeigten zugfesten Folienschicht 43 sind wärmeleitend die Lamellen 44 befestigt. Im gezeigten Ausführungsbeispiel wird dazu eine dünne Schicht hochwärmeleitenden (hochkälteleitenden) Materials auf die zugfeste Folienschicht 43 aufgebracht und in dieses die Lamellen mit ihren Enden eingeklebt.

Wesentlich ist bei den gezeigten Ausführungsbeispielen ein guter Wärmeübergang sowohl vom Wärmeträgermedium an die Umwelt, als auch in umgekehrter Richtung zum Zwecke der Kühlung.

Die beschriebenen Ausführungsbeispiele dienen nur der Erläuterung und sind nicht beschränkend.

**Bezugszeichenliste**

| | | | |
|---|---|---|---|
| 1 | Element | 35 | Trennung |
| 2 | Rohr | 40 | Element |
| 3 | Plattenelement | 41 | Plattenelement |
| 4 | zugfeste Folienschicht | 42 | Rohr |
| 10 | Element | 43 | zugfeste Folienschicht |
| 11 | Plattenelement | 44 | Lamellen |
| 12 | Rohr | 45 | Einlagerungsschicht |
| 13 | zugfeste Folienschicht | | |
| 14 | Ventilatoren | | |
| 15 | Lamellen | | |
| 16 | Umschließung | | |
| 17 | Fußbereich | | |
| 20 | Element | | |
| 21 | Plattenelement | | |
| 22 | Rohr | | |
| 23 | zugfeste Folienschicht | | |
| 24 | Lamellen | | |
| 25 | Umschließung | | |
| 26 | Lamellen | | |
| 27 | Umschließung | | |
| 30 | Element | | |
| 31 | Plattenelement | | |
| 32 | Rohr | | |
| 33 | zugfeste Folienschicht | | |
| 34 | Lamellen | | |

## Patentansprüche

1. Formelement zum Aufbau von Vorrichtungen zur Wärmeübertragung für die Heizung und/oder Kühlung, bestehend aus einem Sandwichaufbau, umfassend ein plattenförmiges Element (1) aus einem Wärme gut leitenden Werkstoff geringer Eigenfestigkeit, auf dessen beiden gegenüberliegenden Oberflächen jeweils eine Schicht (4) eines zugfesten Materials fixiert ist, **dadurch gekennzeichnet, dass** auf wenigstens einer der Oberflächen (4) Lamellen (15) angebracht sind.

2. Formelement nach Anspruch 1, **dadurch gekennzeichnet, dass** jede Lamelle (15) einen abgewinkelten Fußbereich (17) aufweist, der flächig mit der Oberfläche (4) verbunden ist.

3. Formelement nach Anspruch 1, **dadurch gekennzeichnet, dass** der hochleitende Werkstoff geringer Eigenfestigkeit auf Graphitbasis gebildet ist.

4. Formelement nach Anspruch 3, **dadurch gekennzeichnet, dass** das auf Graphitbasis gebildete Material ein Graphitschaum ist.

5. Formelement nach Anspruch 3 oder 4, **dadurch gekennzeichnet, dass** die Druckfestigkeit des Graphitwerkstoffs durch Zugabe von Klebstoff erhöht wird.

6. Formelement nach einem der vorhergehenden Ansprüche, **dadurch gekennzeichnet, dass** die Schichten (4) zugfesten Materials wenigstens teilweise aus Metall, Kunststoff, Naturfaser, Holz oder Mischungen der genannten Materialien gebildet sind.

7. Formelement nach Anspruch 6, **dadurch gekennzeichnet, dass** die zugfesten Schichten (4) als Dünnschicht ausgebildet sind.

8. Formelement nach einem der vorhergehenden Ansprüche, **dadurch gekennzeichnet, dass** in die mittlere Schicht (1) ein zur Durchströmung anschließbares Rohr (12) eingelegt ist.

9. Formelement nach einem der vorhergehenden Ansprüche, **dadurch gekennzeichnet, dass** die Schichten (1, 4) miteinander verklebt sind.

10. Formelement nach einem der vorhergehenden Ansprüche, **dadurch gekennzeichnet, dass** auf wenigstens eine der zugfesten Schichten (4) eine weitere Wärme gut leitende Schicht aufgebracht ist.

11. Formelement nach einem der vorhergehenden Ansprüche, **dadurch gekennzeichnet, dass** im oberen Bereich Ventilatoren (14) angeordnet sind.

12. Wärmeübertragungselement, **dadurch gekennzeichnet, dass** dieses wenigstens ein Formelement nach einem der Ansprüche 1 bis 11 aufweist.

## Claims

1. A formed element for the construction of devices for the heat transfer of a heating and/or a cooling system, composed of a sandwich structure, comprising a plate-shaped element (1) made of a material that is highly heat conducting and comprises a low inherent stability, on the two opposite surfaces of which respectively one layer (4) of a material having a tensile strength is fixed, **characterized in that** lamellae (15) are mounted on at least one of the surfaces (4).

2. A formed element according to claim 1, **characterized in that** each lamella (15) comprises an angled foot part (17) which is connected flatly with the surface (4).

3. A formed element according to claim 1, **characterized in that** the highly conducting material having a low inherent stability is formed on the base of graphite.

4. A formed element according to claim 3, **characterized in that** the material formed on the base of graphite is a graphite foam.

5. A formed element according to claim 3 or 4, **characterized in that** the compressive strength of the graphite material will be increased by adding an adhesive.

6. A formed element according to one of the preceding claims, **characterized in that** the layers (4) of material having a tensile strength are at least partially made of metal, plastic, natural fibre, wood or mixtures of the above mentioned materials.

7. A formed element according to claim 6, **characterized in that** the layers having a tensile strength (4) are formed as thin layers.

8. A formed element according to one of the preceding claims, **characterized in that** a tube (12) which can be connected in order to be flown through is inserted into the intermediate layer (1).

9. A formed element according to one of the preceding claims, **characterized in that** the layers (1, 4) are glued with each other.

10. A formed element according to one of the preceding claims, **characterized in that** another highly heat conducting layer is applied onto at least one of the layers (4) having a tensile strength.

11. A formed element according to one of the preceding claims, **characterized in that** ventilators (14) are arranged in the upper area.

12. Heat transfer element, **characterized in that** this one comprises at least one formed element according to one of the claims 1 through 11.

## Revendications

1. Elément mis en forme destiné à la construction de dispositifs de transfert de chaleur d'une installation de chauffage et/ou d'une installation de refroidissement, composé d'une structure en sandwich, comprenant un élément (1) en forme de plaque en un matériau ayant une bonne conductibilité de chaleur et ayant une moindre résistance mécanique, respectivement une couche (4) en un matériau résistant à la traction étant fixée sur les deux surfaces opposées de celui-ci, **caractérisé en ce que** des lamelles (15) sont disposées sur au moins l'une des surfaces (4).

2. Elément mis en forme selon la revendication 1, **caractérisé en ce que** chaque lamelle (15) comprend une partie de pied (17) coudée, qui est reliée à plat à la surface (4).

3. Elément mis en forme selon la revendication 1, **caractérisé en ce que** le matériau ayant une conductibilité élevée et une moindre résistance mécanique est formé sur la base de graphite.

4. Elément mis en forme selon la revendication 3, **caractérisé en ce que** le matériau formé sur la base de graphite est une mousse de graphite.

5. Elément mis en forme selon la revendication 3 ou la revendication 4, **caractérisé en ce que** la résistance à la compression du matériau en graphite est augmentée par addition d'adhésif.

6. Elément mis en forme selon l'une des revendications précédentes, **caractérisé en ce que** les couches (4) de matériau résistant à la traction sont au moins partiellement formées en métal, en plastique, en fibre naturelle, en bois ou en des mélanges des matériaux mentionnés ci-dessus.

7. Elément mis en forme selon la revendication 6, **caractérisé en ce que** les couches (4) résistantes à la traction sont configurées comme des couches minces.

8. Elément mis en forme selon l'une des revendications précédentes, **caractérisé en ce qu'**un tuyau (12) susceptible d'être raccordé pour être traversé par un flux est inséré dans la couche intermédiaire (1).

9. Elément mis en forme selon l'une des revendications précédentes, **caractérisé en ce que** les couches (1, 4) sont collées l'une à l'autre.

10. Elément mis en forme selon l'une des revendications précédentes, **caractérisé en ce qu'**une autre couche ayant une bonne conductibilité de chaleur est appliquée sur au moins une des couches résistantes à la traction (4).

11. Elément mis en forme selon l'une des revendications précédentes, **caractérisé en ce que** des ventilateurs (14) sont disposés dans la partie supérieure.

12. Elément de transfert de chaleur, **caractérisé en ce que** celui-ci comprend au moins un élément mis en forme selon l'une des revendications 1 à 11.
